# EUROPÄISCHE PATENTSCHRIFT

(11) **EP 3 621 905 B1**
(45) Veröffentlichungstag und Bekanntmachung des Hinweises auf die Patenterteilung: **19.07.2023**
(21) Anmeldenummer: 18726905.5
(22) Anmeldetag: 26.04.2018
(51) Int. Cl.: B65G 65/00, B65G 65/23, B23P 19/00, B66F 9/02

(54) **BEHÄLTERWECHSELVORRICHTUNG**
CONTAINER-EXCHANGING DEVICE
DISPOSITIF DE TRANSFERT DE CONTENANTS

(30) Priorität: 09.05.2017 DE 102017004410
(43) Veröffentlichungstag der Anmeldung: 18.03.2020
(73) Patentinhaber: IDH Technische Produkte GmbH, 08371 Glauchau (DE)
(72) Erfinder: OLIJNYK, Tobias, 08396 Waldenburg (DE)
(74) Vertreter: Findeisen Neumann Scheit Partnerschaft mbB
(86) Internationale Anmeldenummer: PCT/DE2018/000121
(87) Internationale Veröffentlichungsnummer: WO 2018/206028

(56) Entgegenhaltungen:
- EP-A1- 3 020 515
- DE-A1- 10 257 594
- DE-U1-202009 012 532
- JP-A- H06 135 515
- US-A- 5 310 305

## Beschreibung

Die Erfindung betrifft eine Behälterwechselvorrichtung mit einer Bauteilentnahmestation und einer Behälterladestation zum Wechseln von Behältern zwischen einer Fertigungslinie und einer Fahrstraße einer Fertigung, aufweisend ein Grundgerüst, eine Verfahreinheit und eine erste Transfervorrichtung, wobei die Verfahreinheit gegenüber dem Grundgerüst vertikal und die erste Transfervorrichtung gegenüber dem Grundgerüst horizontal verfahrbar sind und die erste Transfervorrichtung eine erste Behältermitnahmevorrichtung aufweist.

In einer Fertigung, beispielsweise einer Automobilfertigung, müssen an einer Fertigungslinie zu montierende Bauteile bereitgestellt werden. Die Bauteile werden dabei üblicherweise in Behältern gelagert, die über eine neben der Fertigungslinie liegende Fahrstraße der Fertigungslinie zugeführt werden. An der jeweiligen Arbeitsstation der Fertigungslinie werden die mit Bauteilen gefüllten Behälter dann auf einer zwischen Fahrstraße und Fertigungslinie liegenden Logistikfläche abgestellt. Sobald ein Behälter entleert ist, wird dieser über die Fahrstraße abgeführt und von einem vollen Behälter ersetzt. Üblicherweise wird das Zu- und Abführen der vollen bzw. leeren Behälter mit Hilfe eines Staplers oder Routenzuges durchgeführt. Dies hat allerdings den Nachteil, dass in der Zeit zwischen dem Abführens eines leeren Behälters und dem Zuführen eines vollen Behälters keine Bauteile an der Fertigungslinie zur Verfügung stehen und somit die Montage unterbrochen ist. Demgegenüber ist es möglich bereits einen weiteren vollen Behälter vor der Entleerung des ersten Behälters an der Arbeitsstation abzustellen. Werden diese Behälter entlang der Fertigungslinie nebeneinander angeordnet, wird der Platzbedarf der gesamten Fertigungslinie deutlich erhöht. Bei einer Anordnung der Behälter hintereinander besteht das Problem, das der an der Fertigungslinie stehende Behälter durch einen aus Sicht der Fertigungslinie dahinter liegenden Behälter versperrt und damit nicht zugänglich ist.

Aus dem Stand der Technik sind verschiedene Behälterwechselvorrichtungen bekannt, die diese Probleme durch eine Zwischenspeicherung eines vollen Behälters lösen. Beispielsweise wird in DE 195 19 643 B4 eine Behälterwechselvorrichtung beschrieben, die aus einem Grundgerüst und einer daran angebrachten Verfahreinheit besteht. Ein mit Bauteilen gefüllter Behälter wird mittels Stapler einer innerhalb des Grundgerüstes der Behälterwechselvorrichtung liegenden Behälterbeladestation zugeführt. Über eine als Rollenbahn ausgebildete Transfervorrichtung wird dieser Behälter dann innerhalb des Grundgerüstes zu einer Bauteilentnahmestation geleitet. Nach der Entleerung des Behälters wird dieser von der Verfahreinheit in eine höher gelegene Ebene der Behälterwechselvorrichtung gehoben und mit der Transfervorrichtung einer innerhalb des Grundgerüstes angeordneten Behälterentnahmestation zugeführt. Von dieser Behälterentnahmestation wird der geleerte Behälter dann von einem Stapler entnommen. Bei dieser Behälterwechselvorrichtung kann bereits nach dem Überführen eines vollen Behälters in die Bauteilentnahmestation ein weiterer voller Behälter in die Behälterbeladestation bereitgestellt werden. Damit steht dieser volle Behälter vor der Entleerung des bereits in der Bauteilentnahmestation befindlichen Behälters in der Behälterwechselvorrichtung zur Verfügung. Die Zeit für den Tausch eines leeren mit einen vollen Behälters kann damit deutlich verkürzt werden. Weiterhin wird durch ein Anheben des leeren Behälters in eine höhere Ebene der Zugang für einen Stapler nicht vom nachrückenden vollen Behälter versperrt.

Eine ähnliche Behälterwechselvorrichtung ist aus DE 20 2009 012 532 U1 bekannt. Auch diese Behälterwechselvorrichtung weist ein Grundgerüst, eine Verfahreinheit und eine als Teleskophubgabel ausgebildete Transfervorrichtung auf. Ein voller Behälter wird einer innerhalb des Grundgerüstes liegenden Behälterbeladestation der Behälterwechselvorrichtung zugeführt. Dabei wird dieser volle Behälter auf Auflagepunkten der Behälterbeladestation abgesetzt. Die Transfervorrichtung wird dann unter diesen Behälter gefahren, hebt diesen von den Auflagepunkten ab und bewegt ihn zur Bauteilentnahmestation. Während der Entnahme der Bauteile aus dem Behälter wird bereits ein weiterer voller Behälter auf den nun freien Auflagepunkten der Behälterbeladestation abgesetzt. Nach der Entleerung des ersten Behälters wird dieser von der Verfahreinheit in eine höhere Ebene gehoben und von der ebenfalls mit angehobenen Transfervorrichtung einer oberhalb der Behälterbeladestation liegenden Behälterentladestation zugeführt und dort auf Auflagepunkten der Behälterentladestation abgesetzt. Anschließend wird die Transfervorrichtung wieder eingefahren und die Verfahreinheit wird erneut zur Bauteilentnahmestation geführt. Die Transfervorrichtung holt nun den in der Behälterbeladestation liegenden Behälter in die Bauteilentnahmestation. Der auf den Auflagepunkten der Behälterentladestation liegende leere Behälter kann bereits bei diesem Vorgang von einem Stapler aus der Behälterwechselvorrichtung entnommen werden.

Nachteilig bei den beiden zuletzt genannten Lösungen ist allerdings, dass die Transfervorrichtung beim Überführen des leeren Behälters von der Bauteilentnahmestation in die Behälterentnahmestation nicht für das Bewegen des vollen Behälters von der Behälterbeladestation in die Bauteilentnahmestation zur Verfügung steht und damit in dieser Zeit keine Bauteile an der Arbeitsstation der Fertigungslinie bereitgestellt werden können.

Weiterhin ist insbesondere für das Entladen der Behälter aus der Behälterentladestation ein Stapler nötig, da dieser nicht ebenerdig in der Behälterwechselvorrichtung positioniert ist. Das Be- oder Entladen eines Routenzuges oder eines führerlosen Transportsystems (FTS) ist damit nicht ohne Stapler möglich.

Eine Behälterwechselvorrichtung nach dem Oberbegriff des Anspruchs 1 ist aus US 5 310 305 A bekannt.

Aufgabe der Erfindung ist es daher, eine Behälterwechselvorrichtung für eine Fertigungslinie einer Fertigung zu schaffen, die sich durch selbsttätiges Be- und Entladen der in der Behälterwechselvorrichtung befindlichen Behälter auszeichnet. Weiterhin sollten der Entlade- und Beladevorgang simultan ablaufen können. Zudem soll das Be- und Entladen ohne Stapler möglich sein und darüber hinaus nur eine geringe Logistikfläche benötigt werden. Diese Aufgabe wird erfindungsgemäß bei einer gattungsgemäßen Behälterwechselvorrichtung mit den Merkmalen des Anspruchs 1 gelöst. Vorteilhafte Weiterbildungen der Erfindung gehen aus den Patentansprüchen 2 bis 10 hervor.

Da eine erste und/oder zweite Transfervorrichtung aus einem Grundgerüst der erfindungsgemäßen Behälterwechselvorrichtung herausgefahren werden können und beide Transfervorrichtungen mit Mitnahmevorrichtungen für Behälter ausgebildet sind, ist damit ein selbsttätiger Be- und Entladevorgang von Behältern in bzw. aus der Behälterwechselvorrichtung möglich. Ein Be- und Entladen der Behälter mit beispielsweise einem Stapler ist hierbei nicht mehr nötig, womit sich eine Routenzug- und FTS-Fähigkeit ergibt. Durch ein Entkoppeln des Be- und Entladevorgangs ist darüber hinaus auch ein simultaner Ablauf von Be- und Entladevorgang möglich. Da bei den bisherigen Behälterwechselvorrichtungen der Be- und Entladevorgang nicht simultan abläuft, sind auf der Fahrstraße bzw. zugehörigen Logistikflächen zwei Behälterstandplätze notwendig. Demgegenüber ist bei der erfindungsgemäßen Behälterwechselvorrichtung nur ein Behälterstandplatz nötig.

Nachfolgend wird ein Ausführungsbeispiel der Erfindung anhand der Zeichnungen erläutert. Es zeigen
- Fig. 1: eine erfindungsgemäße Behälterwechselvorrichtung in einer räumlichen Darstellung
- Fig. 2a bis 2m: einen Be- und Entladevorgang mit der Behälterwechselvorrichtung gemäß Fig. 1

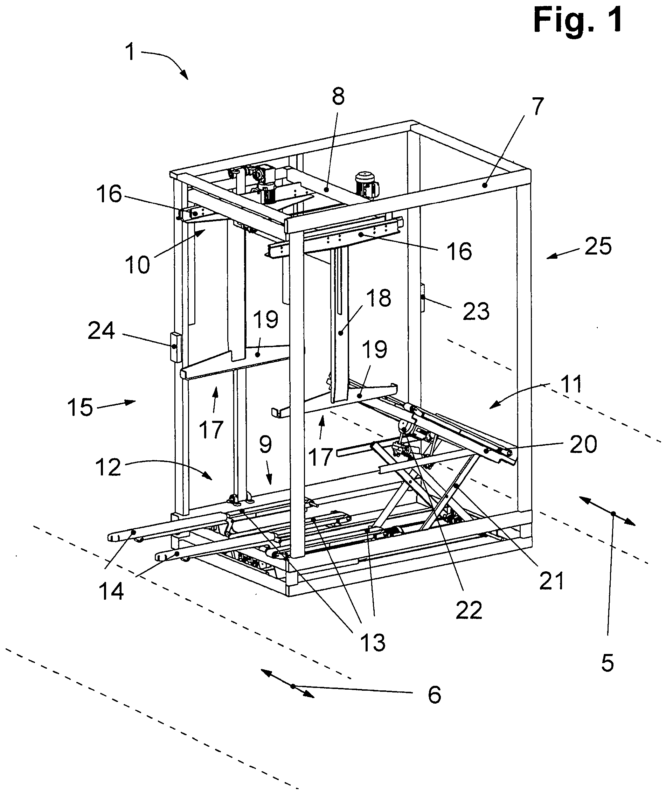

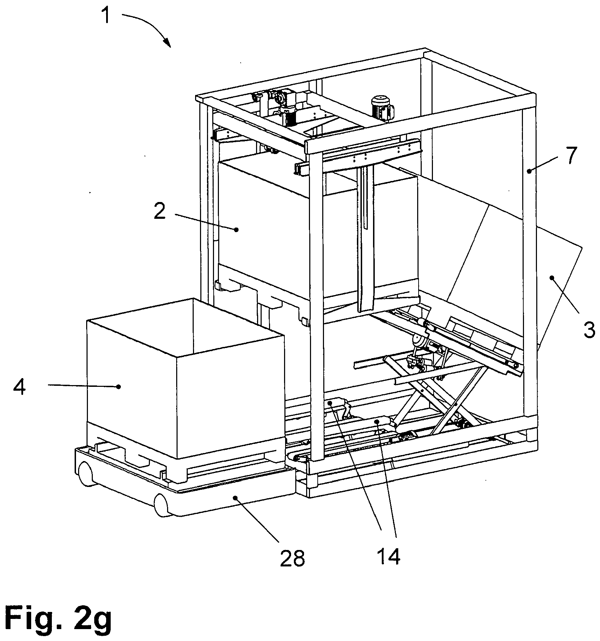

**Fig. 1** zeigt eine erfindungsgemäße Behälterwechselvorrichtung 1 in einer räumlichen Darstellung zum Wechseln von Behältern 2, 3, 4 (Fig. 2g) zwischen einer Fertigungslinie 5 und einer Fahrstraße 6 einer Fertigung. Die Behälter 2, 3, 4 sind in dieser Abbildung allerdings nicht dargestellt. Die Behälterwechselvorrichtung 1 weist ein Grundgerüst 7, eine Verfahreinheit 8, eine erste Transfervorrichtung 9, eine zweite Transfervorrichtung 10, eine Bauteilentnahmestation 11 und eine Behälterladestation 12 auf. Das Grundgerüst 7 besteht aus einer Stahlkonstruktion, ist allerdings nicht hierauf beschränkt.

Die Verfahreinheit 8 ist gegenüber dem Grundgerüst 7 vertikal verfahrbar, wobei die Verfahreinheit 8 von einem motorischen Verfahrantrieb bewegt und an einem Führungssystem geführt wird.

Die erste Transfervorrichtung 9 besteht aus einer Fördereinrichtung mit drei nebeneinander liegenden Förderbändern 13 und einer Teleskophubgabel 14 mit zwei Zinken. Diese Transfervorrichtung 9 ist horizontal gegenüber dem Grundgerüst 7 verfahrbar, wobei im dargestellten ausgefahrenen Zustand die Zinken der Teleskophubgabel 14 das Grundgerüst 7 auf einer der Fahrstraße 6 zugewandten Seite 15 der Behälterwechselvorrichtung 1 überragen. Im eingefahrenen Zustand sind die Zinken innerhalb des Grundgerüstes 7 angeordnet. Sowohl der Abstand der Zinken der Teleskophubgabel 14, als auch der Abstand der Förderbänder 13 sind so ausgelegt, dass die Behälter 2, 3, 4 auf den Zinken bzw. Förderbändern 13 abstützbar sind. Die damit einhergehende Haftreibung zwischen den Zinken und den Behältern 2, 3, 4 bzw. den Förderbändern 13 und den Behältern 2, 3, 4 wirkt damit als eine erste Behältermitnahmevorrichtung.

Die zweite Transfervorrichtung 10 ist mit Teleskopschienen 16 ausgestaltet und mit der Verfahreinheit 8 verbunden, sodass bei einer Vertikalbewegung der Verfahreinheit 8 auch diese Transfervorrichtung 10 in dieser Richtung mitgeführt wird. Weiterhin ist die zweite Transfervorrichtung 10 ebenfalls gegenüber dem Grundgerüst 7 horizontal verfahrbar. Ausgehend von der dargestellten Position ist die zweite Transfervorrichtung 10 sowohl in Richtung Fahrstraße 6, als auch in Richtung Fertigungslinie 5 verfahrbar. In Richtung Fahrstraße 6 können dabei die Teleskopschienen 16 soweit gegen das Grundgerüst 7 horizontal bewegt werden, dass diese in einem ersten ausgefahrenen Zustand das Grundgerüst 7 auf der der Fahrstraße 6 zugewandten Seite 15 der Behälterwechselvorrichtung 1 überragen. Wird die zweite Transfervorrichtung 10 in Richtung Fertigungslinie 5 ausgefahren, so sind die Teleskopschienen 16 (ausgehend von der dargestellten Position) zumindest soweit gegen das Grundgerüst 7 horizontal verfahrbar, dass diese in einem zweiten ausgefahrenen Zustand die Behälterladestation 12 in Richtung Fertigungslinie 5 überragen. An der zweiten Transfervorrichtung 10 ist weiterhin eine zweite Behältermitnahmevorrichtung 17 vorgesehen, die als Behälterabstützeinrichtung ausgestaltet ist. Diese Behältermitnahmevorrichtung 17 besteht aus zwei vertikalen und zwei horizontalen Trägern 18, 19, wobei die horizontalen Träger 19 an ihrer Unterseite abgewinkelt sind und die Behälter 2, 3, 4 hierauf abstützbar sind.

Die Bauteilentnahmestation 11 der Behälterwechselvorrichtung 1 ist mit einer Behälteraufnahme 20 ausgebildet, wobei diese Behälteraufnahme 20 eine Hebevorrichtung 21 und eine Kippvorrichtung 22 aufweist. Allerdings sind die Hebe- und Kippvorrichtung 21, 22 optional. Ebenso sind auch nur die Kippvorrichtung 22 bzw. nur die Hebevorrichtung 21 denkbar.

Sowohl die erste, als auch die zweite Transfervorrichtung 9, 10 werden mit motorischen Verfahrantrieben bewegt. Allerdings sind diese Verfahrantriebe und der Verfahrantrieb der Verfahreinheit 8 nicht auf motorische Verfahrantriebe beschränkt. Beispielsweise können hierfür auch hydraulische oder pneumatische Verfahrantriebe verwendet werden. Ebenso können die Transfervorrichtungen und die Verfahreinheit auch händisch bewegt werden. Zur Vereinfachung der Handhabung kann die Verfahreinheit beispielsweise mit einem pneumatischen Balancer ausgestattet sein.

Weiterhin sind an der Behälterwechselvorrichtung 1 Bedienfelder 23, 24 vorgesehen, wobei ein Bedienfeld 24 an der der Fahrstraße 6 zugewandten Seite 15 und ein Bedienfeld 23 an einer der Fertigungslinie 5 zugewandten Seite 25 der Behälterwechselvorrichtung angeordnet sind. Allerdings sind diese Bedienfelder nur optional. Ebenso kann auch nur ein Bedienfeld 23, 24 vorgesehen sein.

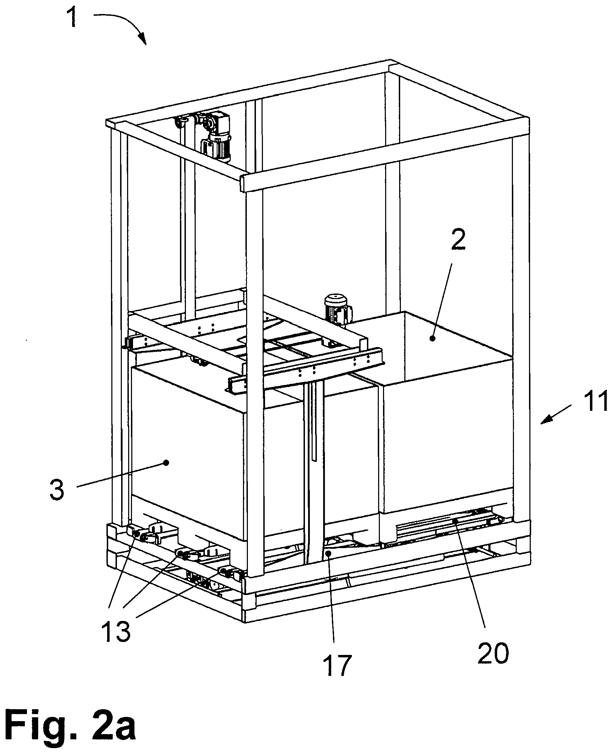

In den **Fig. 2a** bis **2m** ist ein Be- und Entladevorgang mit der Behälterwechselvorrichtung 1 gemäß **Fig. 1** gezeigt.

**Fig. 2a** zeigt die Behälterwechselvorrichtung 1 mit einem ersten Behälter 2 und einem zweiten Behälter 3. Der erste Behälter 2 befindet sich in der Bauteilentnahmestation 11, wobei dieser Behälter 2 dabei auf der Behälteraufnahme 20 der Bauteilentnahmestation 11 abgestützt ist. Die Kipp- und Hebevorrichtung 21, 22 dieser Behälteraufnahme 20 sind eingefahren. Der zweite Behälter 3 ist auf den Förderbändern 13 abgestützt. Die beiden Zinken der Teleskophubgabel 14 sind eingefahren und befinden sich unterhalb des zweiten Behälters 3. Die Verfahreinheit 8 und die zweite Transfervorrichtung 10 sind so positioniert, dass die zweite Behältermitnahmevorrichtung 17 der zweiten Transfervorrichtung 10 unterhalb des zweiten Behälters 3 angeordnet ist, ohne dass dieser Behälter 3 auf dieser Behältermitnahmevorrichtung 17 aufliegt. Der erste Behälter 2 ist leer und wird mit den folgenden Schritten durch den zweiten, mit Bauteilen gefüllten (vollen) Behälter 3 ersetzt.

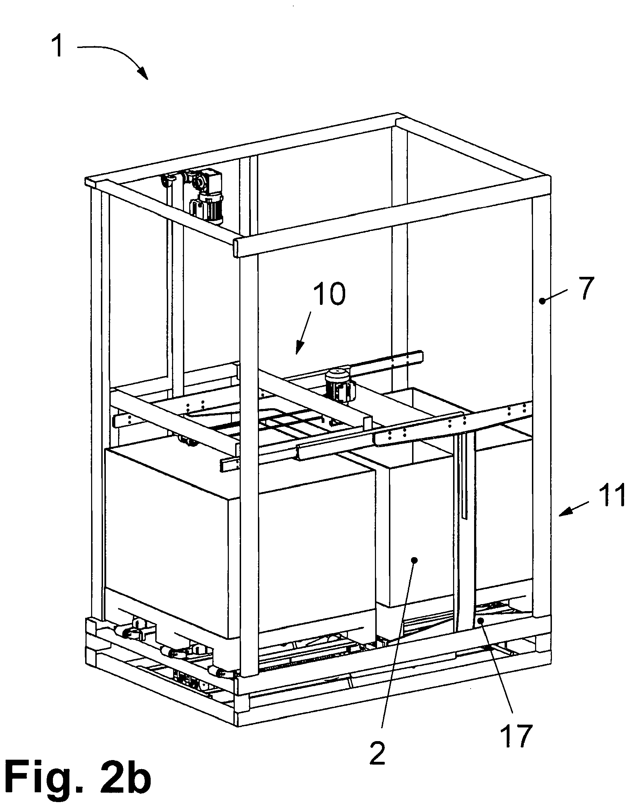

Wie in **Fig. 2b** dargestellt, wird hierzu zunächst die zweite Transfervorrichtung 10 horizontal zum Grundgerüst 7 in Richtung Bauteilentnahmestation 11 bewegt, wobei dabei die zweite Behältermitnahmevorrichtung 17 der zweiten Transfervorrichtung 10 unterhalb des ersten Behälters 2 positioniert wird.

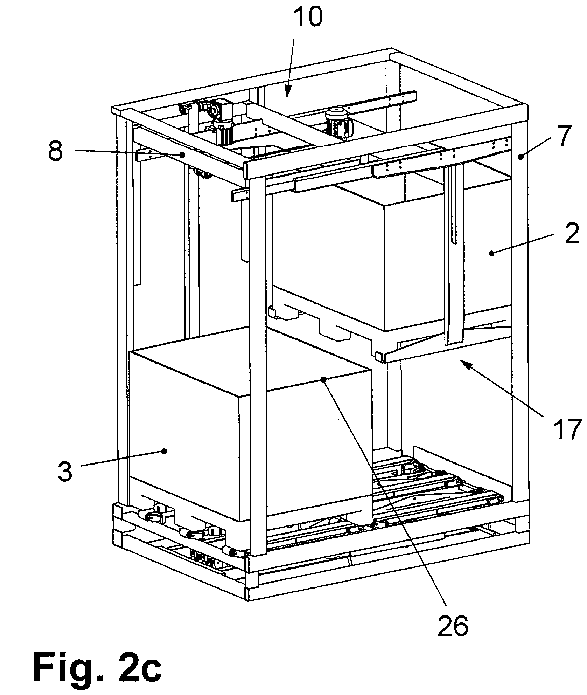

In einem nächsten Schritt (**Fig. 2c**) wird die Verfahreinheit 8 vertikal zum Grundgerüst 7 bewegt, sodass die mit der Verfahreinheit 8 verbundene zweite Transfervorrichtung 10 nach oben bewegt wird. Bei dieser Aufwärtsbewegung wird der erste Behälter 2 auf der zweiten Behältermitnahmevorrichtung 17 der zweiten Transfervorrichtung 10 abgestützt und damit in eine obere Position in der Behälterwechselvorrichtung 1 gehoben. Diese obere Position ist dann erreicht, wenn diese Behältermitnahmevorrichtung 17 oberhalb einer Behälteroberkante 26 des zweiten Behälters 3 liegt.

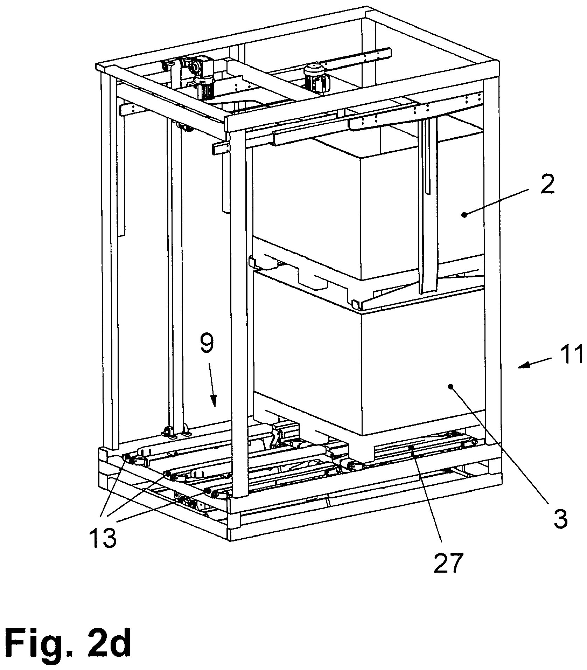

Gemäß **Fig. 2d** ist der zweite Behälter 3 dann von den Förderbändern 13 der ersten Transfervorrichtung 9 in die Bauteilentnahmestation 11 bewegt worden. Die Bauteilentnahmestation 11 kann dabei optional mit Gleit- oder Rollenbahnen 27 zur Führung des Behälters 3 ausgestattet sein. Die Rollenbahnen 27 können dabei optional auch angetrieben werden.

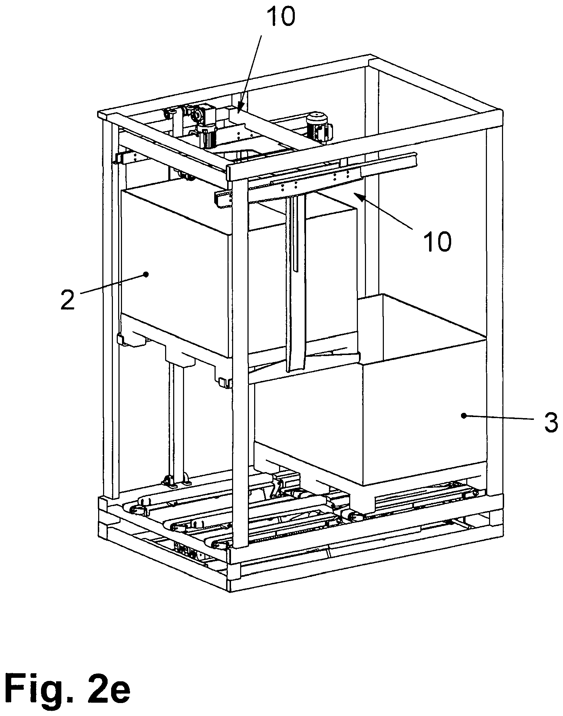

Wie in **Fig. 2e** dargestellt, wird dann die zweite Transfervorrichtung 10 horizontal in Richtung Fahrstraße 6 und damit in ihre horizontale Position gemäß **Fig. 2a** bewegt. Der erste Behälter 2 befindet sich damit nun oberhalb der Position des zweiten Behälters 3 in **Fig. 2a****.** Grundsätzlich können die beiden Schritte gemäß **Fig. 2d** und **Fig. 2e** auch simultan ablaufen. Ebenso können die Schritte auch in umgekehrter Reihenfolge verlaufen, sodass zunächst der Zustand gemäß **Fig. 2e** und anschließend der Zustand gemäß **Fig. 2d** erreicht ist.

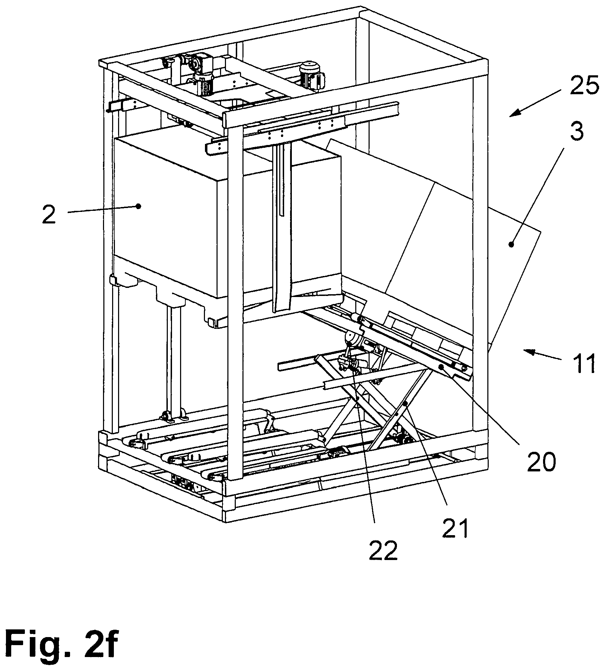

**Fig. 2f** zeigt eine ergonomische Positionierung des zweiten Behälters 3. Hierzu werden die Hebe- und Kippvorrichtung 21, 22 an der Behälteraufnahme 20 der Bauteilentnahmestation 11 betätigt, sodass der zweite Behälter 3 angehoben und in Richtung Fertigungslinie 5 geneigt wird. Die Betätigung der Hebe- und Kippvorrichtung 21, 22 kann beispielsweise über das an der der Fertigungslinie 5 zugewandten Seite 25 der Behälterwechselvorrichtung 1 angeordnete Bedienfeld 23 erfolgen. So wird beispielsweise über die Eingabe einer Werkerkennung eine auf den jeweiligen Werker abgestimmte Behälterhöhe und Behälterneigung angefahren. Grundsätzlich kann je nach Anwendungsfall aber auf eine ergonomische Positionierung des Behälters 3 verzichtet werden. Das Bedienfeld 23 ist in der Abbildung allerdings verdeckt. Nach dem Abschluss des Schritts gemäß **Fig. 2f** bzw., sofern keine ergonomische Positionierung des Behälters 3 erfolgt, nach Abschluss des Schritts gemäß **Fig. 2e** können die im zweiten Behälter 3 befindlichen Bauteile entnommen und an der Fertigungslinie 5 verbaut werden.

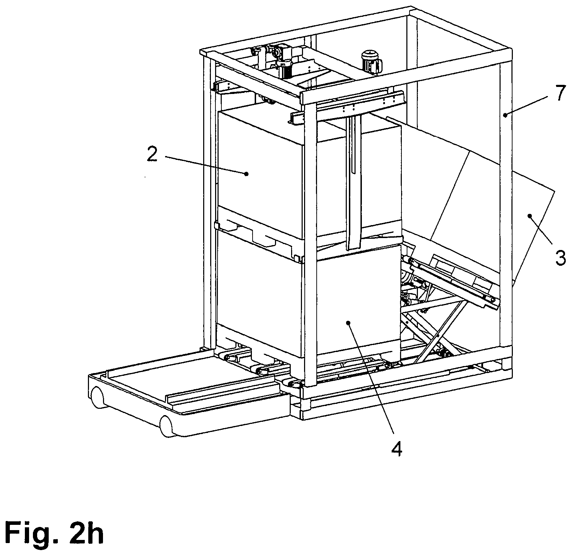

In **Fig. 2g** und **Fig. 2h** ist das Zuführen eines dritten, vollen Behälters 4 in die Behälterwechselvorrichtung 1 dargestellt, wobei gemäß **Fig. 2g** der dritte Behälter 4 zunächst auf der Fahrstraße 6 beispielsweise von einem führerlosen Transportsystem 28 zur Behälterwechselvorrichtung 1 geführt wird und auf der der Fahrstraße 6 zugewandten Seite 15 der Behälterwechselvorrichtung 1 positioniert wird. Anschließend werden die Zinken der Teleskophubgabel 14 unter den dritten Behälter 4 ausgefahren. Beim Heben der Zinken der Teleskophubgabel 14 wird der dritte Behälter 4 auf diesen abgestützt und vom Transportsystem 28 abgehoben. Mit dem Einfahren der Zinken wird der dritte Behälter 4 mitgeführt und in das Grundgerüst 7 der Behälterwechselvorrichtung 1 hineingefahren. **Fig. 2h** zeigt den in das Grundgerüst 7 hineingefahrenen dritten Behälter 4. Der dritte Behälter 4 befindet sich nun auf der Position des zweiten Behälters 3 in **Fig. 2a****.**

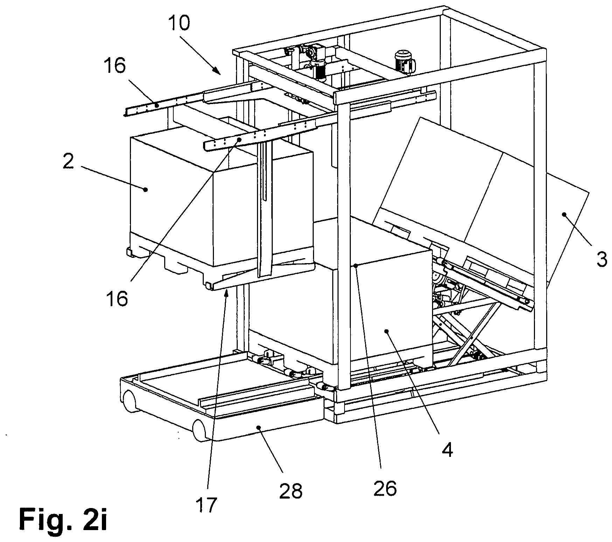

Der freie Platz auf dem Transportsystem 28 kann nun mit dem leeren ersten Behälter 2 belegt werden. Hierzu wird gemäß **Fig. 2i** die zweite Transfervorrichtung 10 aus dem Grundgerüst 7 der Behälterwechselvorrichtung 1 herausgefahren. Die Teleskopschienen 16 überragen dabei das Grundgerüst 7 auf der der Fahrstraße 6 zugewandten Seite 15 der Behälterwechselvorrichtung 1 und der erste Behälter 2 ist über dem Transportsystem 28 positioniert, wobei die zweite Behältermitnahmevorrichtung 17 oberhalb einer Behälteroberkante 26 des dritten Behälters 4 angeordnet ist.

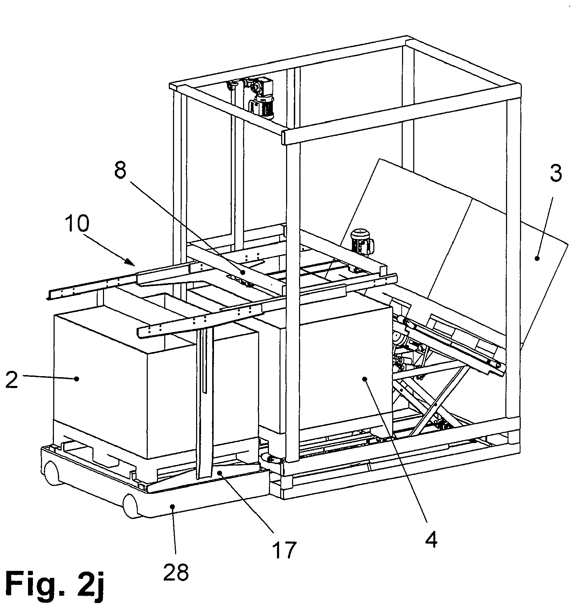

Über eine vertikale Abwärtsbewegung der Verfahreinheit 8 (**Fig. 2j**) wird der erste Behälter 2 auf dem Transportsystem 28 abgesetzt. Die Verfahreinheit 8 wird dabei so weit herabgelassen, dass der Behälter 2 nicht mehr auf der zweiten Behältermitnahmevorrichtung 17 der zweiten Transfervorrichtung 10 abgestützt wird, sondern auf dem Transportsystem 28.

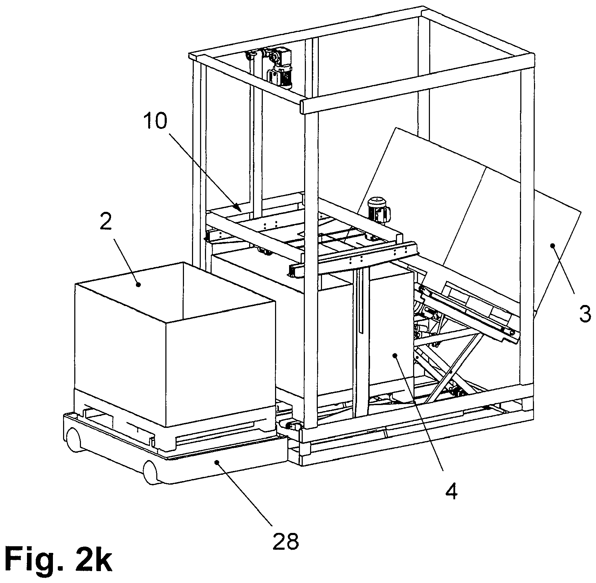

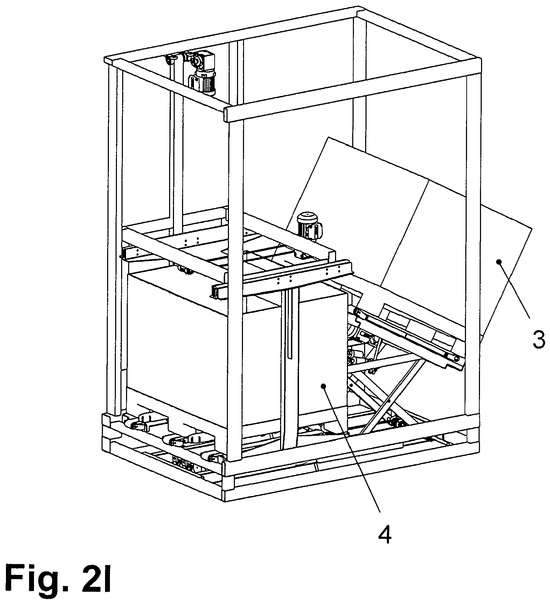

Nach dem Absetzen des ersten Behälters 2 auf dem Transportsystem 28 wird die zweite Transfervorrichtung 10 wieder in das Grundgerüst 7 auf ihre Position gem. **Fig. 2a** gefahren (**Fig. 2k**) und der erste Behälter 2 vom Transportsystem 28 auf der Fahrstraße 6 abgeführt (**Fig. 2l**), sodass sich in der Behälterwechselvorrichtung 1 nun nur der zweite Behälter 3 und der dritte Behälter 4 befinden.

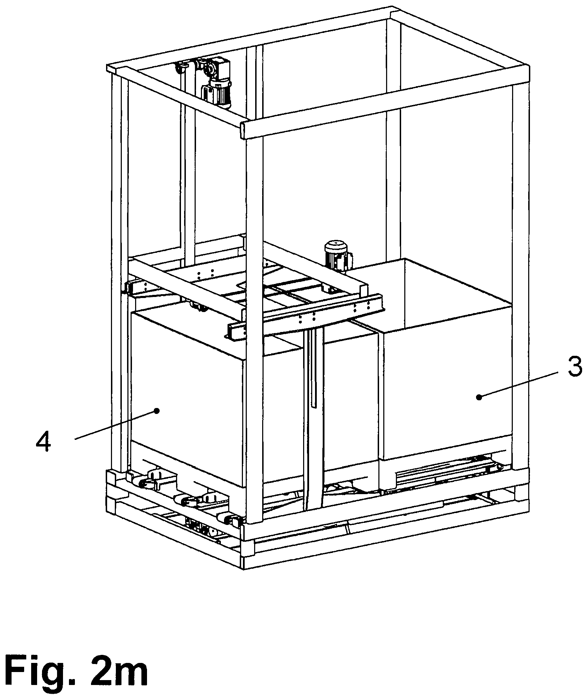

Nach der Entleerung des zweiten Behälters 3 wird dieser aus seiner ergonomischen Position über ein Rückfahren der Hebe- und Kippvorrichtung 21, 22 in ihre Ausgangspositionen gebracht (**Fig. 2m**). Damit ist der Ausgangszustand gemäß **Fig. 2a** erreicht, wobei aber nun der zweite Behälter 3 geleert und der dritte Behälter 4 voll ist. Für ein Abführen des zweiten Behälters 3 und ein Zuführen des dritten 4 und eines vierten (nicht dargestellten) Behälters werden die in den **Fig. 2a** bis **Fig. 2m** dargestellten Schritte in entsprechender Weise durchgeführt.

Grundsätzlich ist es mit der Behälterwechselvorrichtung 1 auch möglich, zwei mit Abstand übereinander angeordnete Transportsysteme 28 auf der Fahrstraße 6 zu Be- oder Entladen. In der zuvor beschriebenen Ausführung wird der erste (geleerte) Behälter 2 auf dem Transportsystem 28 abgesetzt, welches bereits den dritten Behälter 4 der Behälterwechselvorrichtung 1 zugeführt hat (**Fig. 2i** und **Fig. 2j**). Genauso ist es aber auch möglich, den ersten Behälter 2 auf einer oberhalb des Transportsystems 28 angeordneten zweiten Transportsystems abzusetzen, wobei dieses zweite Transportsystem nicht gezeigt ist.

Die im Ausführungsbeispiel beschriebene erste Transfervorrichtung 9 besteht aus der Fördereinrichtung 13 und der Teleskophubgabel 14. Die Anzahl der Förderbänder und Zinken richtet sich in erster Linie nach dem Aufbau der Behälter 2, 3, 4. Entgegen der dargestellten Ausführung kann die erste Transfervorrichtung auch aus zwei Förderbändern und einer Teleskophubgabel 14 mit drei Zinken bestehen. Grundsätzlich der Aufbau der ersten Transfervorrichtung 9 aber nicht auf Förderbänder und Teleskophubgabel 14 beschränkt, sondern kann beispielsweise auch nur aus einer Teleskophubgabel 14 bestehen, wobei diese unter einen auf dem Transportsystem 28 der Fahrstraße 6 angeordneten Behälter 2, 3, 4, unter einen in der Bauteilentnahmestation 11 angeordneten Behälter 2, 3, 4 und unter einen an der Behälterladestation 12 angeordneten Behälter 2, 3, 4 fahrbar ist. Ebenso kann die erste Transfervorrichtung 9 beispielsweise auch aus einer Gleitbahn oder einer Rollenbahn und einer Klinke zum Schieben der Behälter 2, 3, 4 auf dieser Gleitbahn bzw. Rollenbahn bestehen.

Die zweite Transfervorrichtung 10 ist nicht auf Teleskopschienen 16 beschränkt. So kann diese beispielsweise auch mit Teleskopzylindern ausgestaltet sein.

Grundsätzlich ist die erfindungsgemäße Behälterwechselvorrichtung 1 auch dann nutzbar, wenn bei einer Demontage Bauteile aus der Fertigungslinie 5 in den Behälter 2, 3, 4 an der Bauteilentnahmestation 11 der Behälterwechselvorrichtung 1 abgelegt, dieser Behälter 2, 3, 4 nach der Füllung an das Transportsystem 28 übergeben und ein leerer Behälter 2, 3, 4 von der Fahrstraße 6 zur Bauteilentnahmestation 11 geführt wird.

Weiterhin ist das Transportsystem 28 der Fahrstraße 6 nicht auf führerlose Transportsysteme 28 beschränkt. Ebenso ist die Behälterwechselvorrichtung 1 beispielsweise auch bei Bandförderern oder Routenzügen möglich.

Sowohl die erste Behältermitnahmevorrichtung, als auch die zweite Behältermitnahmevorrichtung 17 sind nicht auf Behälterabstützeinrichtungen beschränkt. Beispielsweise können die erste Behältermitnahmevorrichtung und/oder die zweite Behältermitnahmevorrichtungen 17 beispielsweise auch als Behältergreifeinrichtungen ausgebildet werden.

Die Behälter 2, 3, 4 können auch als Stückgut-Durchlaufregale ausgestaltet sein.

### Bezugszeichenliste

- 1: Behälterwechselvorrichtung
- 2: Behälter
- 3: Behälter
- 4: Behälter
- 5: Fertigungslinie
- 6: Fahrstraße
- 7: Grundgerüst
- 8: Verfahreinheit
- 9: erste Transfervorrichtung
- 10: zweite Transfervorrichtung
- 11: Bauteilentnahmestation
- 12: Behälterladestation
- 13: Förderband, Fördereinrichtung
- 14: Teleskophubgabel
- 15: der Fahrstraße zugewandte Seite der Behälterwechselvorrichtung
- 16: Teleskopschiene
- 17: Behältermitnahmevorrichtung
- 18: Träger
- 19: Träger
- 20: Behälteraufnahme
- 21: Hebevorrichtung
- 22: Kippvorrichtung
- 23: Bedienfeld
- 24: Bedienfeld
- 25: der Fertigungslinie zugewandte Seite der Behälterwechselvorrichtung
- 26: Behälteroberkante
- 27: Gleitbahn, Rollenbahn
- 28: Transportsystem

## Patentansprüche

1. Behälterwechselvorrichtung (1) mit einer Bauteilentnahmestation (11) und einer Behälterladestation (12) zum Wechseln von Behältern (2, 3, 4) zwischen einer Fertigungslinie (5) und einer Fahrstraße (6) einer Fertigung, aufweisend ein Grundgerüst (7), eine Verfahreinheit (8) und eine erste Transfervorrichtung (9), wobei die Verfahreinheit (8) gegenüber dem Grundgerüst (7) vertikal und die erste Transfervorrichtung (9) gegenüber dem Grundgerüst (7) horizontal verfahrbar sind und die erste Transfervorrichtung (9) eine erste Behältermitnahmevorrichtung aufweist, wobei die Behälterwechselvorrichtung (1) eine zweite Transfervorrichtung (10) aufweist und diese zweite Transfervorrichtung (10) mit der Verfahreinheit (8) verbunden ist und gegenüber dem Grundgerüst (7) horizontal verfahrbar ist und wobei die zweite Transfervorrichtung (10) eine zweite Behältermitnahmevorrichtung (17) aufweist, **dadurch gekennzeichnet dass** die erste Transfervorrichtung (9) und/oder die zweite Transfervorrichtung (10) auf einer der Fahrstraße (6) zugewandten Seite (15) der Behälterwechselvorrichtung (1) aus dem Grundgerüst (7) herausfahrbar ausgestaltet sind.

2. Behälterwechselvorrichtung nach Anspruch 1, **dadurch gekennzeichnet,**
**dass** die erste Behältermitnahmevorrichtung und/oder die zweite Behältermitnahmevorrichtung (17) als Behälterabstützeinrichtung oder Behältergreifeinrichtung ausgestaltet sind.

3. Behälterwechselvorrichtung nach Anspruch 1, **dadurch gekennzeichnet,**
**dass** die erste Transfervorrichtung (9) eine Fördereinrichtung (13) und eine Teleskophubgabel (14) aufweist.

4. Behälterwechselvorrichtung nach Anspruch 3, **dadurch gekennzeichnet,**
**dass** die Teleskophubgabel (14) unter einen an der Behälterladestation (12) angeordneten Behälter (2, 3, 4) fahrbar ist.

5. Behälterwechselvorrichtung nach Anspruch 3, **dadurch gekennzeichnet,**
**dass** die Teleskophubgabel (14) unter einen auf einem Transportsystem (28) der Fahrstraße (6) angeordneten Behälter (2, 3, 4) fahrbar ist.

6. Behälterwechselvorrichtung nach Anspruch 1, **dadurch gekennzeichnet,**
**dass** die zweite Transfervorrichtung (10) mit Teleskopschienen (16) oder Teleskopzylindern ausgestaltet ist.

7. Behälterwechselvorrichtung nach Anspruch 1, **dadurch gekennzeichnet, dass** die Verfahreinheit (8) an einem Führungssystem verfahrbar ist.

8. Behälterwechselvorrichtung nach Anspruch 1, **dadurch gekennzeichnet, dass** die Verfahreinheit (8) einen pneumatischen Balancer aufweist.

9. Behälterwechselvorrichtung nach Anspruch 1, **dadurch gekennzeichnet,**
**dass** die Verfahreinheit (8) und/oder die erste Transfervorrichtung (9) und/oder die zweite Transfervorrichtung (10) einen motorischen oder hydraulischen oder pneumatischen Verfahrantrieb aufweisen oder händisch betätigbar sind.

10. Behälterwechselvorrichtung nach Anspruch 1, **dadurch gekennzeichnet,**
**dass** die Bauteilentnahmestation (11) eine Behälteraufnahme (20) aufweist und diese Behälteraufnahme (20) eine Hebevorrichtung (21) und/oder eine Kippvorrichtung (22) aufweist.

## Claims

1. Container-changing device (1) with a component-removal station (11) and a container-loading station (12) for changing containers (2, 3, 4) between a production line (5) and a road (6) of a production facility, comprising a base frame (7), a traversing unit (8) and a first transfer device (9), wherein the traversing unit (8) can be moved vertically relative to the base frame (7), and the first transfer device (9) can be moved horizontally relative to the base frame (7), and the first transfer device (9) comprises a first container-carrying device, wherein the container-changing device (1) has a second transfer device (10) and this second transfer device (10) is connected to the traversing unit (8) and can be horizontally traversed relative to the base frame (7), and the second transfer device (10) has a second container-carrying device (17), **characterized in that** the first transfer device (9) and/or the second transfer device (10) are designed such that they can be moved out of the base frame (7) on a side (15) of the container-changing device (1) facing the road (6).

2. Container-changing device according to claim 1, **characterised in that** the first container-carrying device and/or the second container-carrying device (17) are designed as a container-supporting device or container-gripping device.

3. Container-changing device according to claim 1, **characterised in that** the first transfer device (9) comprises a conveyor device (13) and a telescopic lifting fork (14).

4. Container-changing device according to claim 3, **characterised in that** the telescopic lifting fork (14) is movable under a container (2, 3, 4) arranged at the container-loading station (12).

5. Container-changing device according to claim 3, **characterised in that** the telescopic lifting fork (14) is movable under a container (2, 3, 4) arranged on a transport system (28) of the road (6).

6. Container-transfer device according to claim 1, **characterized in that** the second transfer device (10) is designed with telescopic rails (16) or telescopic cylinders.

7. Container-transfer device according to claim 1, **characterized in that** the traversing unit (8) can be traversed on a guide system.

8. Container-transfer device according to claim 1, **characterised in that** the traversing unit (8) has a pneumatic balancer.

9. Container-changing device according to claim 1, **characterized in that** the traversing unit (8) and/or the first transfer device (9) and/or the second transfer device (10) have a motorised or hydraulic or pneumatic traversing drive or can be actuated manually.

10. Container-changing device according to claim 1, **characterised in that** the component-removal station (11) comprises a container receptacle (20), and that this container receptacle (20) has a lifting device (21) and/or a tilting device (22).

## Revendications

1. Dispositif de changement de conteneur (1) avec un poste de prélèvement de composants (11) et un poste de chargement de conteneur (12) pour le changement de conteneurs (2, 3, 4) entre une ligne de production (5) et une voie (6) d'une production, présentant une structure de base (7), une unité de translation (8) et un premier dispositif de transfert (9), l'unité de translation (8) pouvant être déplacée verticalement par rapport à la structure de base (7) et le premier dispositif de transfert (9) pouvant être déplacé horizontalement par rapport à la structure de base (7) et le premier dispositif de transfert (9) présentant un premier dispositif d'entraînement de conteneur, le dispositif de changement de conteneur (1) présentant un second dispositif de transfert (10) et ce second dispositif de transfert (10) étant relié à l'unité de translation (8) et pouvant être déplacé horizontalement par rapport à la structure de base (7) et le second dispositif de transfert (10) présentant un second dispositif d'entraînement de conteneur (17), **caractérisé en ce que** le premier dispositif de transfert (9) et/ou le second dispositif de transfert (10) sont conçus sur un côté (15) du dispositif de changement de conteneur (1) orienté vers la voie (6) de manière à pouvoir être sortis de la structure de base (7).

2. Dispositif de changement de conteneur selon la revendication 1, **caractérisé en ce que**
le premier dispositif d'entraînement de conteneur et/ou le second dispositif d'entraînement de conteneur (17) sont conçus comme un dispositif d'appui de conteneur ou un dispositif de préhension de conteneur.

3. Dispositif de changement de conteneur selon la revendication 1, **caractérisé en ce que**
le premier dispositif de transfert (9) présente un dispositif de convoyage (13) et une fourche télescopique de levage (14).

4. Dispositif de changement de conteneur selon la revendication 3, **caractérisé en ce que**
la fourche télescopique de levage (14) peut être déplacée sous un conteneur (2, 3, 4) disposé sur la station de chargement de conteneurs (12).

5. Dispositif de changement de conteneur selon la revendications, **caractérisé en ce que**
la fourche télescopique de levage (14) peut être déplacée sous un conteneur (2, 3, 4) disposé sur un système de transport (28) de la voie (6).

6. Dispositif de changement de conteneur selon la revendication 1, **caractérisé en ce que**
le second dispositif de transfert (10) est conçu avec des rails télescopiques (16) ou des vérins télescopiques.

7. Procédé selon la revendication 1, **caractérisé en ce que**
l'unité de translation (8) peut être déplacée sur un système de guidage.

8. Dispositif de changement de conteneur selon la revendication 1, **caractérisé en ce que**
l'unité de translation (8) présente une poulie pneumatique.

9. Dispositif de changement de conteneur selon la revendication 1, **caractérisé en ce que**
l'unité de translation (8) et/ou le premier dispositif de transfert (9) et/ou le second dispositif de transfert (10) présentent un entraînement en translation motorisé, hydraulique ou pneumatique, ou peuvent être actionnés manuellement.

10. Dispositif de changement de conteneur selon la revendication 1, **caractérisé en ce que**
le poste de prélèvement de composants (11) présente un support de conteneur (20) et que ce support de conteneur (20) présente un dispositif de levage (21) et/ou un dispositif de basculement (22).
